# EUROPÄISCHE PATENTSCHRIFT

(11) **EP 0 809 166 B1**
(45) Veröffentlichungstag und Bekanntmachung des Hinweises auf die Patenterteilung: **12.09.2001**
(21) Anmeldenummer: 97710010.6
(22) Anmeldetag: 21.05.1997
(51) Int. Cl.: G05D 3/12

(54) **Gewindestellglied**
Spindle driven servomechanism
Servomécanisme à entraînement à vis

(30) Priorität: 23.05.1996 DE 29609271 U
(43) Veröffentlichungstag der Anmeldung: 26.11.1997
(73) Patentinhaber: Reisacher, Andreas, 63877 Sailauf (DE); Straub, Wolfgang, 63877 Sailauf (DE)
(72) Erfinder: Reisacher, Andreas, 63877 Sailauf (DE); Straub, Wolfgang, 63877 Sailauf (DE)
(74) Vertreter: Harders, Gerhard, Dr.

(56) Entgegenhaltungen:
- EP-A- 0 617 945
- EP-A- 0 816 745
- DE-A- 3 143 713
- DE-A- 3 713 006
- DE-A- 4 012 674
- DE-U- 29 601 987

## Beschreibung

Die vorliegende Erfindung betrifft ein für Nivellierung eingerichtetes Gewindestellglied mit in einer Gewindelagerung geführtem Stellglied, an dem ein Stellmotor angeordnet ist, der durch seine Drehbewegung das Stellglied in der Gewindelagerung verstellt, wobei der Stellmotor durch eine Auf-Abwärts-Schalteinrichtung betätigt wird.

Solche Stellglieder verden z. B. verwendet, um Höhenniveaus von Fließestrich, Betonkonstruktionen, Hohlraumbodenfüßen oder entsprechenden Deckenkonstruktionen zu nivellieren. Die Nivellierung wurde in herkömmlicher Weise durch manuelle Einstellung des Gewindestellglieds, beispielsweise der Spindelnivellierböcke mit einem konventionellen Nivelliergerät bewirkt. Dabei wurde die Gewindespindel durch Drehen mit der Hand auf das gewünschte Niveau eingestellt, was zeitaufwending und unbequem ist, da die Bedienungsperson sich für jeden Einstellvorgang bücken muß, um an die Gewindespindel zu gelangen. Außerdem ist es möglich, daß beim Ablesen des konventionellen Nivelliergeräts Ablesefehler unterlaufen und das gewünschte Niveau dadurch falsch eingestellt wird. Trotzdem ist diese konventionelle Methode der Niveaueinstellung seit mehr als 20 Jahren unverändert beibehalten worden, weil der Fachmann offenbar eine einfachere und bequemere Methode nicht für durchführbar gehalten hat.

Die EP 617 945 A2 betrifft ein Gewindestellglied für ein verstellbares Krankenbett mit einem in einer Gewindelagerung geführtem Stellglied.

Die DE 31 43 713 Al betrifft ein entsprechendes Gewindestellglied zum Abstützen und Nivellieren eines Wohnwagens. Keines der Dokumente gibt einen Hinweis darauf, den Stellmotor lösbar mit dem Stellglied zu verbinden.

Aufgabe der vorliegenden Erfindung ist es, ein Gewindestellglied zu schaffen, das die Nachteile der herkömmlichen Stellglieder vermeidet und einfach und ohne Bücken des Bedienungspersonals, also mit ergonomischer Arbeitshaltung, schnell und mit hoher Genauigkeit auf ein gewünschtes Niveau auch mehrerer Spindelnivellierböcke eingestellt werden kann. Dabei soll das Nivellieren der Gewindestellglieder mit allen herkömmlichen Nivelliergeräten möglich sein.

Gelöst wird diese Aufgabe durch ein Gewindestellglied mit den Merkmalen des kennzeichnenden Teils des Anspruchs 1 . Die abhängigen Ansprüche geben bevorzugte Ausgestaltungen der Erfindung wieder, insbesondere deren Kombination mit herkömmlichen Nivelliergeräten.

Die Erfindung ermöglicht eine schnelle automatische oder manuelle Einstellung des gewünschten Niveaus, eine wesentlich vereinfachte Handhabung und eine sehr genaue Einstellung. Ständiges Bücken und Wiederaufrichten des Bedienungspersonals wird vermieden, wodurch in wesentlich kürzerer Zeit beispielsweise wesentlich mehr Spindelnivellierböcke einivelliert werden können.

Das Gewindestellglied enthält ein in einer Gewindelagerung geführtes Stellglied, an welchem ein Stellmotor angeordnet ist, der durch seine Drehbewegung das Stellglied in seiner Gewindelagerung verstellt. Der Stellmotor wird durch eine Auf-Abwärts-Schalteinrichtung betätigt, wodurch das Stellglied in der Gewindelagerung aufwärts bzw. abwärts geführt wird.

In einer bevorzugten Ausführungsform der Erfindung ist die Auf-Abwärts-Schalteinrichtung mit einer elektronischen Meßwerterfassung-Einrichtung gekoppelt, beispielsweise mit einem elektronischen Schlauchnivelliergerät, wie es z. B. in dem DE-GM 296 01 987.9 beschrieben ist. Auch eine Koppelung mit einem Lasernivelliergerät ist möglich. Dabei können die mit den Geräten elektronisch erfaßten Höhenmeßwerte beispielsweise in einem Prozessor in Steuerimpulse für den Stellmotor umgewandelt werden. Die erfaßten Höhenmeßwerte können aber auch optisch oder akustisch angezeigt und manuell in Steuerimpulse für den Stellmotor umgewandelt werden, beispielsweise über einen Auf-Abwärtsschalter.

Die Erfindung wird nachfolgend anhand der Figurenbeschreibung beispielhaft näher erläutert. Darin zeigen
- Fig. 1: eine Koppelung eines Fließestrichspindelnivellierbocks mit einem elektronischen Schlauchnivelliergerät;
- Fig. 2: eine Koppelung des gleichen Nivellierbocks mit einem Laser-Höhenmeßwerterfassungsgerät; und

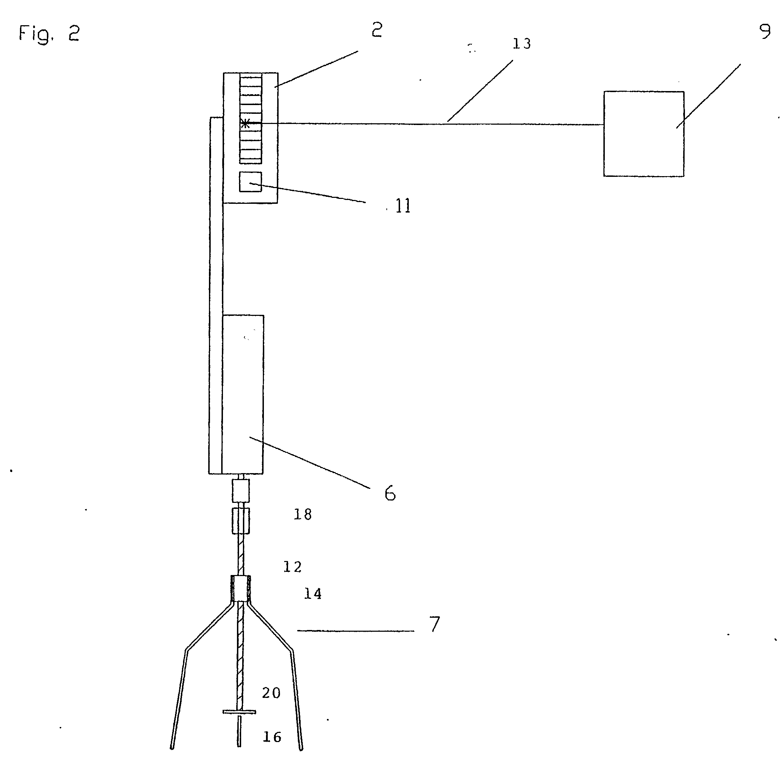

- Fig. 2: eine Koppelung des gleichen Nivellierbocks mit einem manuellen Schlauchnivelliergerät.

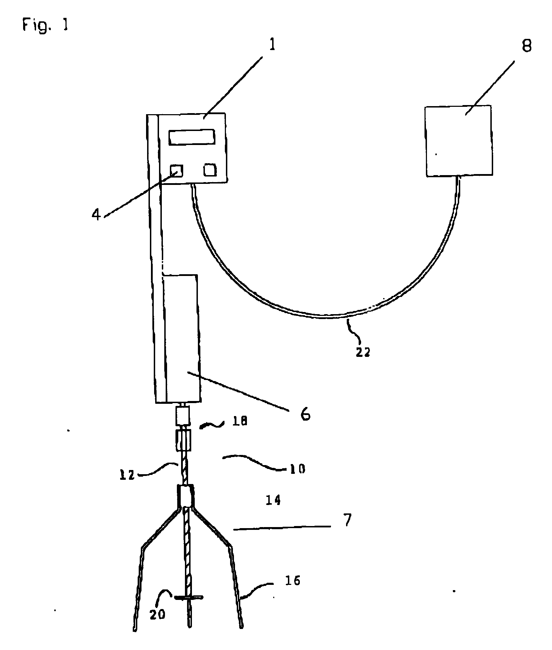

In Figur 1 ist als Gewindestellglied ein Fließestrich-Spindelnivellierbock 7 dargestellt, der drei abgewinkelte Füße 16 enthält, die an einer Gewindelagerung 14 angeordnet sind. In der Gewindelagerung 14 läuft eine Gewindestange 12, die über eine Antriebsverbindung 18 mit dem Stellmotor 6 verbunden ist. Bei einer Drehung des Stellmotors 6 bewegt sich die Gewindestange 14 in Abhängigkeit von der Drehrichtung des Stellmotors 6 aufwärts bzw. abwärts. Am unteren Ende des Gewindestange 12 ist eine Nivellierscheibe 20 angeordnet, die als Bezugspunkt für das einzunivellierende Niveau dient.

Der Stellmotor 6 wird durch eine elektronische Meßwerterfassungseinrichtung 1 angesteuert, wie sie Z. B. in dem DE-GM 296 10 987.9 beschrieben ist. Sie enthält einen wassergefüllten Absolutnullpunktaufnehmer 8, z.B. in Form eines gegen die äußere Atmosphäre offenen Gefäßes, das über einen wassergefüllten Schlauch 22 mit einem in der Meßwerterfassungs-Einrichtung 1 angeordneten Differenzdrucksensor verbunden ist, der die die Differenzen der Höhenmeßwerte erfaßt und die so ermittelten elektronischen Meßwerte über einen Prozessor in Steuerimpulse für den Stellmotor 6 umwandelt. Beim Aktivieren der elektronischen Meßwerterfassungs-Einrichtung 1 durch den Taster 4 stellt somit der Stellmotor 6 die Nivellierscheibe 20 auf das gewünschte Niveau ein.

Die Figur 2 stellt eine Kombination eines Fließestrich-Spindelnivellierbocks 7 mit einer Laser-Meßwerterfassungs-Einrichtung 2 dar. Der untere Teil mit dem Fließestrich-Spindelnivellierbock 7 und dem Stellmotor 6 entspricht der Anordnung der Figur 1. Die Laser-Meßwerterfassungs-Einrichtung 2 empfängt den vom Nivellierlaser 9 ausgesandten Laserstrahl 13 und zeigt die gemessenen Höhenmeßwerte auf einer optischen Anzeige an bzw. wandelt sie über einen Prozessor in Steuerimpulse für den Stellmotor 6 um. Bei optischer Anzeige wird der Stellmotor 6 über den Taster 11 in das gewünschte Niveau verfahren.

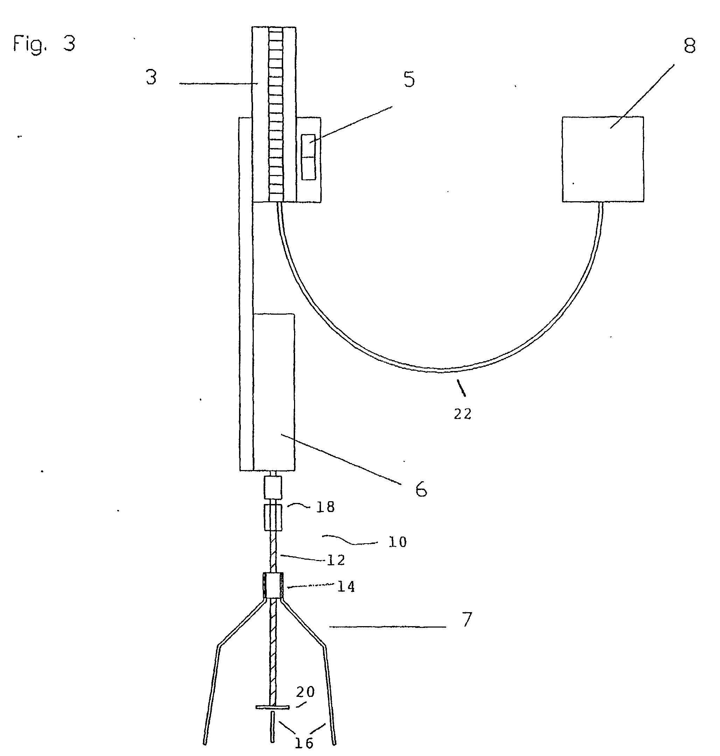

Eine weitere Anwendungsmöglichkeit ist in der Figur 3 dargestellt. Es handelt sich dabei um die Verwendung einer manuellen Meßwerterfassungs-Einrichtung, beispielseise in Form einer optischen Meßwerterfassungs-Einrichtung 3, die als Schlauchwaage ausgestaltet sein kann. Sie enthält einen Absolutnullpunktaufnehmer 9 in Form eines offenen oder geschlossenen Gefäßes, der über einen Schlauch 22, der mit einer Flüssigkeit, beispielsweise Wasser, gefüllt ist, mit der manuellen Meßwerterfassungs-Einrichtung 3 verbunden ist, die aus einem mit Skaleneinteilung versehenen Steigrohr bestehen kann. Vermittels der Auf-Abwärts-Schalteinrichtung 5 kann mit den beiden Tasten der Stellmotor 6 angesteuert werden.

Der Stellmotor 6 kann mit dem Stellglied 10 lösbar verbunden sein, beispielsweise über eine steckbare Antriebsverbindung 18, enthaltend eine Buchse, in welche ein mit der Antriebsache des Stellmotors 6 verbundener Einsteckdorn eingeführt wird. Auf diese Weise lassen sich alle oben genannten Meßwerterfassungs-Einrichtungen mit dem Stellmotor und damit mit dem Gewindestellglied kombinieren.

## Patentansprüche

1. Für Nivellierung eingerichtetes Gewindestellglied mit in einer Gewindelagerung geführtem Stellglied (10), an dem ein Stellmotor (6) angeordnet ist, der durch seine Drehbewegung das Stellglied (10) in der Gewindelagerung (14) verstellt, wobei derStellmotor (6) durch eine Auf-Abwärts-Schalteinrichtung (5) betätigt wird,
**dadurch gekennzeichnet, daß**
der Stellmotor (6) mit dem Stellglied (10) lösbar verbunden ist.

2. Gewindestellglied nach Anspruch 1, **dadurch gekennzeichnet, daß** die Auf-Abwärts-Schalteinrichtung (5) mit einer elektronischen Meßwerterfassungs-Einrichtung (1) für Höhenmeßwerte gekoppelt ist, wobei die elektronisch erfaßten Höhenmeßwerte in einem Prozessor in Steuerimpulse für die Auf-Abwärts-Schalteinrichtung (5) umgewandelt werden.

3. Gewindestellglied nach Anspruch 1, **dadurch gekennzeichnet, daß** die Auf-Abwärts-Schalteinrichtung (5) mit einer optischen Meßwerterfassungs-Einrichtung (3) gekoppelt ist und die optisch erfaßten Höhenmeßwerte manuell oder elektronisch in Steuerimpulse für die Auf-Abwärts-Schalteinrichtung (5) umgewandelt werden.

4. Gewindestellglied nach den vorigen Ansprüchen, **dadurch gekennzeichnet,**
**daß** es ein Fließestrich-Nivellierbock, Beton-Nivellierbock oder ein Gewindestellglied für Hohlraumbodenfüße oder Deckenkonstruktionen ist.

5. Gewindestellglied nach Anspruch 2, **dadurch gekennzeichnet, daß** die elektronische Meßwerterfassungs-Einrichtung (1) ein elektronisches Schlauchnivelliermeßgerät ist.

6. Gewindestellglied nach Anspruch 2, **dadurch gekennzeichnet, daß** die elektronische Meßwerterfassungs-Einrichtung (1) ein Lasermeßwerterfassungsgerät ist.

7. Gewindestellglied nach Anspruch 3, **dadurch gekennzeichnet, daß** die optische Meßwerterfassungs-Einrichtung (3) ein Schlauchnivelliergerät ist.

## Claims

1. Threaded actuator adapted for levelling, comprising an actuator (10) guided in a threaded support, on which a servomotor is disposed that adjusts said actuator (10) in said threaded support (14) by its rotational movement, wherein said actuator (6) is operated by an upward/downward switching means (5), **characterised in that**
said servomotor (6) is detachably connected to said actuator (10).

2. Threaded actuator according to Claim 1, **characterised in that** said upward/downward switching means (5) is coupled to an electronic data detector means (1) for detection of relative elevation values, with said electronically detected relative elevation values being converted in a processor into control pulses for said upward/downward switching means (5).

3. Threaded actuator according to Claim 1, **characterised in that** said upward/downward switching means (5) is coupled to an optical data detector means (3) and that said optically detected relative elevation values are manually or electronically converted into control pulses for said upward/downward switching means (5).

4. Threaded actuator according to the preceding Claims, **characterised in that** it is a flow flooring sighting trestle, a concrete levelling trestle or a threaded actuator for cavity bottom bases or ceiling systems.

5. Threaded actuator according to Claim 2, **characterised in that** said electronic data detector means (1) is an electronic rubber-tube type levelling measuring instrument.

6. Threaded actuator according to Claim 2, **characterised in that** said electronic data detector means is a laser data detector means.

7. Threaded actuator according to Claim 3, **characterised in that** said optical data detector means (3) is a rubber-tube type levelling measuring instrument.

## Revendications

1. Organe final fileté installé pour le nivelage, comprenant un organe final (10) guidé dans un support fileté, sur lequel un moteur de positionnement est disposé de fan à ajuster ledit organe final (10) dans ledit support fileté (14) par son mouvement rotatif, dans lequel ledit organe final (6) est commandé par un moyen commutateur "en haut/en bas" (5),
**caractérisé en ce que**
ledit moteur de positionnement (6) est raccordé audit organe final (10) de façon amovible.

2. Organe final fileté selon la revendication 1, **caractérisé en ce que** ledit moyen commutateur "en haut/en bas" (5) est accouplé à un moyen enregistreur de données électronique (1) à détecter des valeurs de nivellement, lesdites valeurs de nivellement détectées de façon électronique étant converties, dans un processeur, en impulsions de commande pour ledit moyen commutateur "en haut/en bas" (5).

3. Organe final fileté selon la revendication 1, **caractérisé en ce que** ledit moyen commutateur "en haut/en bas" (5) est accouplé à un moyen enregistreur de données (3) optique, et en ce que lesdites valeurs de nivellement détectées de façon optique sont converties, à la main ou de façon électronique, en impulsions de commande pour ledit moyen commutateur "en haut/en bas" (5).

4. Organe final fileté selon les revendications précédentes, **caractérisé en ce qu'**il est un chevalet de nivelage d'une aire de repous fluidifié, un chevalet de nivelage de béton, ou un organe final fileté pour des bases du fond de creux ou des constructions du plancher.

5. Organe final fileté selon la revendication 2, **caractérisé en ce que** ledit moyen enregistreur de données électronique (1) est un instrument électronique de mesure du nivelage du type à tuyau souple.

6. Organe final fileté selon la revendication 2, **caractérisé en ce que** ledit moyen enregistreur de données électronique est un moyen enregistreur de données à laser.

7. Organe final fileté selon la revendication 3, **caractérisé en ce que** ledit moyen enregistreur de données (3) optique est un instrument de mesure du nivelage du type à tuyau souple.
